# EUROPÄISCHE PATENTSCHRIFT

(11) **EP 0 664 753 B1**
(45) Veröffentlichungstag und Bekanntmachung des Hinweises auf die Patenterteilung: **13.03.1996**
(21) Anmeldenummer: 93920817.9
(22) Anmeldetag: 24.09.1993
(51) Int. Cl.: B62D 27/02, B62D 29/00

(54) **ENDSEITIGER ABSCHLUSS EINES FAHRZEUGLÄNGSTRÄGERS**
END PART FOR A VEHICLE LONGITUDINAL BEAM
PARTIE TERMINALE D'UN LONGERON DE VEHICULE

(30) Priorität: 23.10.1992 DE 4235738
(43) Veröffentlichungstag der Anmeldung: 02.08.1995
(73) Patentinhaber: AUDI AG, D-85045 Ingolstadt (DE)
(72) Erfinder: KREIS, Gundolf, D-85077 Oberstimm (DE)
(74) Vertreter: Engelhardt, Harald
(86) Internationale Anmeldenummer: EP9302598
(87) Internationale Veröffentlichungsnummer: WO9410022

(56) Entgegenhaltungen:
- EP-A- 0 461 346
- DE-A- 4 204 826
- GB-A- 2 169 375
- US-A- 4 988 230
- PATENT ABSTRACTS OF JAPAN vol. 16, no. 270 (M-1266)(5313) 17. Juni 1992 & JP,A,04 066 374 (NISSAN) 2. März 1992 in der Anmeldung erwähnt
- PATENT ABSTRACTS OF JAPAN vol. 16, no. 270 (M-1266)(5313) 17. Juni 1992 & JP,A,04 066 374 (NISSAN) 2. März 1992

## Beschreibung

Die Erfindung betrifft einen endseitigen Abschluß eines Fahrzeuglängsträgers nach dem Oberbegriff des Anspruchs 1.

In der Tragstruktur einer Fahrzeugkarosserie werden, insbesondere im Fahrzeugunterbau, Längsträger und Querträger verwendet. Bei den heute üblichen, selbsttragenden Karosserien sind diese Träger Hohlprofile, die jeweils aus wenigstens zwei tiefgezogenen und miteinander verschweißten Blechen hergestellt sind.

Am vorderen und hinteren Ende ist ein Längsträgerteil jeweils mit einem Abschlußteil versehen, das seinerseits Befestigungselemente zur Befestigung von Anbauteilen aufweist. Auch solche Abschlußteile sind Tiefziehteile aus Stahlblech, die mit dem Längsträgerteil verschweißt sind. Anbauteile sind beispielsweise am vorderen Ende eines Längsträgers Stoßfängerhalterungen, ein Windfang, ein Kühler, Scheinwerfer oder eine Abschleppösenbefestigung.

Zum Aufbau solcher selbsttragender Stahlblechkarosserien werden im Tiefziehverfahren verformte Stahlbleche verwendet Die Preßwerkzeuge zum Verformen der Bleche sind verhältnismäßig teuer, lassen jedoch hohe Stückzahlen zu, so daß für eine Großserienfertigung damit eine kostengünstige Lösung zur Verfügung steht.

Es ist daher insbesondere für Kleinserien bekannt (EP 0 146 716 B1), Fahrzeugkarosserien für Personenkraftwagen mit einer Tragstruktur aus Hohlprofilen herzustellen, welche durch Knotenelemente miteinander verbunden sind. Die Hohlprofile sind dabei als Leichtmetall-Strangprofile und die Knotenelemente als Leichtmetall-Gußteile ausgebildet. Neben einer kostengünstigen Lösung für kleinere Serien werden mit einer solchen Konstruktion vorteilhaft auch geringere Karosseriegewichte und Verbesserungen beim Korrosionsschutz erreicht. Der vordere Abschluß der Fahrzeuglängsträger ist hier in der Art eines Knotenelements als Leichtmetall-Gußteil mit angeformten Haltern ausgeführt. Ein solches Leichtmetall-Gußteil ist durch die Art der Herstellung und wegen des relativ großen Materialbedarfs verhältnismäßig teuer.

Bei einer weiter bekannten Karosserie aus Leichtmetall-Strangprofilen (Aluminium Journal, Herausgeber: Aluminium-Zentrale e.V., Düsseldorf, erschienen in Zeitschrift ALUMINIUM 64 (1988), Heft 9) sind die beiden vorderen Längsträgerenden durch einen stumpf aufgesetzten und verschweißten Querträger miteinander verbunden. Befestigungsmöglichkeiten für Anbauteile sind dort nicht dargestellt.

Ein bekannter, gattungsgemäßer, endseitiger Abschluß eines Fahrzeuglängsträgers (US 4 988 230) besteht aus einem Längsträgerteil als Hohlprofilträger und einem Abschlußteil, das an einem Ende des Längsträgerteils eingesteckt und mit diesem verbunden ist und das wenigstens ein Befestigungselement zur Befestigung von Anbauteilen aufweist. Das Abschlußteil ist ein Abschnitt eines Strangpreßprofils mit einer ringförmig geschlossenen Außenwand.

Die Längsachse des Abschlußteils und die Längsachse des Längsträgerteils stehen hier jeweils senkrecht aufeinander, wobei die Abschnittlänge des Abschlußteils einem Innendurchmesser des Längsträgerteils entspricht. Die beiden gegenüberliegenden Schnittflächen des Abschlußteils liegen jeweils in einer Ebene und sind zueinander parallel. Für eine formschlüssige Anlage an der Einsteckverbindung ist es daher erforderlich, auch die Innenkontur des Längsträgerteils entsprechend mit zwei parallel zueinander liegenden, ebenen Flächen auszubilden. Die Querschnittkontur des Längsträgerhohlprofils ist damit im Abschlußbereich nicht mehr frei dimensionierbar, sondern wird im wesentlichen durch die Schnittflächen des Abschlußteils bestimmt. Dies ist besonders ungünstig, wenn der Längsträger ebenfalls ein Strangpreßprofil ist und dadurch die Querschnittkontur über seine gesamte Länge vorgegeben ist, da ein Längsträger nicht nach der Geometrie seines Abschlußteils, sondern nach anderen Kriterien, wie seiner Steifigkeit und seinem Verformungsverhalten sowie seiner Energieaufnahme bei einem Aufprall konstruiert werden soll.

Wegen der Herstellung als Abschnitt eines Strangpreßprofils ist der Verlauf angeformter Befestigungselemente in Längsrichtung vorgegeben. Durchstecköffnungen, insbesondere für Verschraubungen, verlaufen in der bekannten Anordnung bei der Verwendung an einem Längsträger daher in einer Querebene des Fahrzeugs. Die Anschraubrichtung für Anbauteile am Ende von Längsträgern, wie z.B. für Stoßstangen, liegt jedoch in Fahrzeuglängsrichtung.

Es ist eine Konstruktion bekannt (JP 4-66374 A. In: Patents Abstracts of Japan, Sect. M Vol. 16 (1992), Nr. 270 (M-1266), bei der bei einem endseitigen Abschluß eines Fahrzeuglängsträgers die Längsachse eines Abschlußteils und die Längsachse des Längsträgerteils in gleicher Richtung liegen. Am Abschlußteil ist aber hier weder ein Befestigungselement angebracht noch ist eine Einsteckverbindung über den gesamten Profilquerschnitt vorgesehen.

Aufgabe der Erfindung ist es demgegenüber, einen gattungsgemäßen, endseitigen Abschluß eines Fahrzeuglängsträgers so weiterzubilden, daß bei einer weiter kostengünstigen und stabilen Ausführung eine freiere Dimensionierung möglich ist.

Diese Aufgabe wird mit den kennzeichnenden Merkmalen des Anspruchs 1 gelöst.

Gemäß Anspruch 1 entspricht die Außenkontur des Abschlußteils bzw. des Längsträgerhohlprofils der Innenkontur des Längsträgerhohlprofils bzw. des Abschlußteils. Das Längsträgerhohlprofil und das Abschlußteil sind mit gegenseitigen Anlageflächen formschlüssig ineinandergesteckt, wobei die Längsachse des Abschlußteils und die Längsachse des Längsträgerteils in der gleichen Richtung liegen.

Damit wird erreicht, daß das Abschlußteil auch bei einer komplizierten Querschnittsform des Längsträgerhohlprofils für eine formschlüssige, stabile Anlageverbindung geeignet ist. Die im Strangpreßverfahren angeformten und eingeformten Befestigungselemente liegen in Längsrichtung des Längsträgerteils und sind damit für einen Großteil der Anwendungsfälle zur Befestigung von Anbauteilen zweckmäßig ausgerichtet.

Nach Anspruch 2 ist an der Außenkontur des Abschlußteils als Befestigungselement wenigstens eine (in Profillängsrichtung durchgehende) Leiste angeformt, die als Befestigungsflansch und/oder als Mutternhalter zur Befestigung von Anbauteilen zur Verfügung steht. Solche Flansche können für Schraubbefestigungen mit einer Bohrung oder einem Gewinde versehen werden. Als Mutternhalter werden die Flansche bevorzugt als C-Profil ausgeführt. Es sind jedoch auch an der Außenkontur in Längsrichtung verlaufende, hohlzylindrische Profile möglich, die beispielsweise als Durchstecköffnungen oder zum Anbringen eines Gewindes verwendbar sind. Solche Leisten und Flansche werden bereits beim Strangpressen mit angeformt und stehen damit kostengünstig und ohne zusätzliche Bauteile und Maßnahmen zur Verfügung.

Die an der Außenkontur angeformten Befestigungselemente verhindern, daß ein Abschlußteil in ein entsprechend geformtes Längsträgerhohlprofilteil einschiebbar ist. Es wird daher mit Anspruch 3 vorgeschlagen, daß diese Befestigungselemente jeweils einseitig zu einer Endseite des Abschlußteils ausgeklinkt sind. Damit ist im Bereich der Ausklinkung das Längsträgerhohlprofil auf das Abschlußteil überlappend für einen geeigneten Formschluß und eine gute Verbindungsmöglichkeit aufschiebbar.

Als weiteres Befestigungselement kann vorteilhaft nach Anspruch 4 innerhalb des Hohlprofils des Abschlußteils als Befestigungselement wenigstens ein in Längsrichtung verlaufender Hohlzylinder, insbesondere zur Aufnahme einer Verschraubung, vorgesehen sein. Diese Hohlzylinder dienen zusätzlich der Versteifung und Stabilität des Abschlußteils.

Als Versteifungselemente können weiter nach Anspruch 5 innerhalb des Hohlprofils in Längsrichtung verlaufende Verstärkungswände angeordnet sein, die ggfs. die in Längsrichtung verlaufenden Hohlzylinder halten und verbinden.

Besonders vorteilhaft ist der erfindungsgemäße Abschluß nach Anspruch 6 bei einer Leichtmetall-Karosserie einsetzbar, wo die gesamte Tragstruktur aus Leichtmetallteilen, insbesondere Leichtmetall-Strangprofilen und Leichtmetall-Gußteilen, als Knotenelemente besteht. Dabei soll sowohl das Längsträgerteil als auch das Abschlußteil aus Leichtmetall, insbesondere aus einer Aluminiumlegierung, bestehen.

Als Verbindungstechnik zwischen dem Längsträgerteil und dem Abschlußteil wird zweckmäßig nach Anspruch 7 in an sich bekannter Weise Schweißen und/oder Verschrauben und/oder Verkleben und/oder Vernieten verwendet.

Anhand eines Ausführungsbeispiels wird die Erfindung mit weiteren Einzelheiten, Merkmalen und Vorteilen näher erläutert.

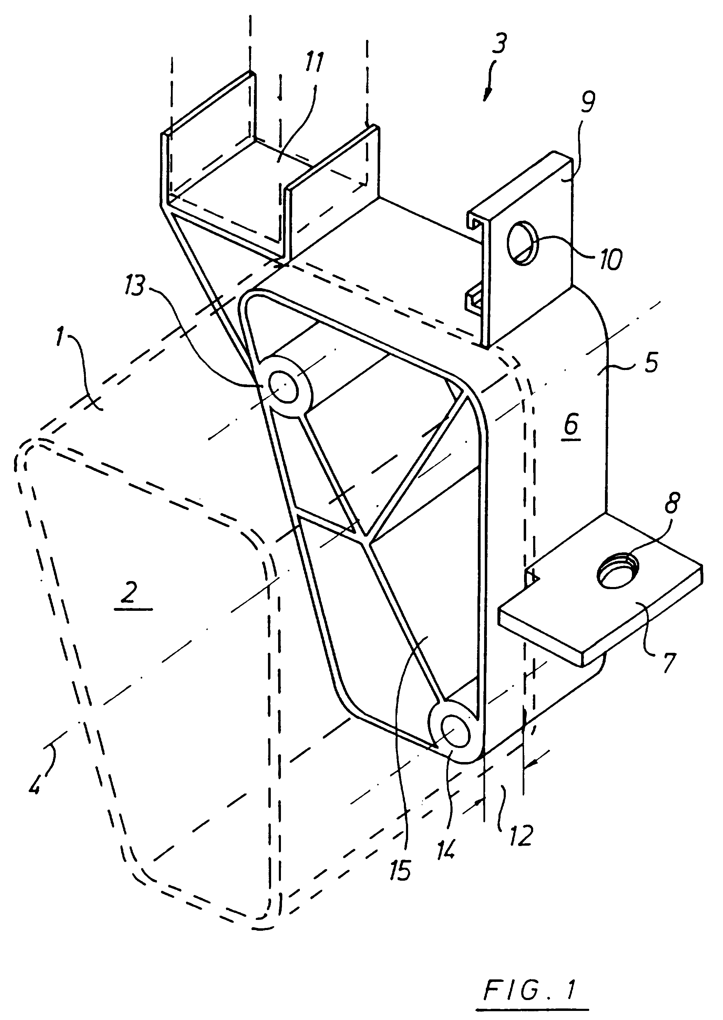

In Fig. 1 ist (strichliert) das vordere Ende eines Fahrzeuglängsträgerteils 1 dargestellt. Dieses Längsträgerteil 1 ist ein Hohlprofil, das als Strangpreßprofil aus einer Aluminiumlegierung hergestellt ist. Das Hohlprofil des Längsträgerteils 1 weist (zumindest im Bereich des vorderen Endes) eine Innenkontur 2 auf, die frei von Innenteilen ist.

Weiter ist ein mit dem vorderen Längsträgerteilende verbundenes Abschlußteil 3 dargestellt. Dieses Abschlußteil 3 ist ein Abschnitt eines Strangpreßprofils aus einer Aluminiumlegierung, wobei die Längsachse des Strangpreßprofilsabschnitts und die Längsachse 4 des Längsträgerteils 1 in der gleichen Richtung liegen. Das Abschlußteil 3 ist als Hohlprofil mit einer umlaufenden, ringförmig geschlossenen Außenwand 5 hergestellt, deren Außenkontur 6 der Innenkontur 2 des Längsträgerteils 1 entspricht.

An der Außenkontur 6 des Abschlußteils 3 sind als Befestigungselemente ein Befestigungsflansch 7 mit einer Gewindebohrung 8, ein C-Profil 9 mit einer Bohrung 10 als Mutternhalter und eine Konsole 11 zum Anschluß eines weiteren (strichliert eingezeichneten) Strangpreßprofils oder eines Abschleppösenhalters angeformt.

Diese Befestigungselemente 7, 9 und 11 sind an der dem Längsträgerteil 1 zugewandten Endseite des Abschlußteils 3 jeweils um einen Bereich 12 ausgeklinkt bzw. zurückversetzt.

In diesem Bereich 12 ist das Abschlußteil 3 in das Längsträgerteil 1 formschlüssig eingeschoben und an den Anlageflächen durch Verschweißen oder Verkleben fest verbunden.

Innerhalb der Außenwand 5 des Abschlußteils 3 sind in Längsrichtung verlaufende Hohlzylinder 13, 14 als Befestigungsaugen angeordnet. Diese Hohlzylinder 13, 14 können sowohl als Durchstecköffnungen für Schraubenbolzen als auch zur Anbringung von Gewindebohrungen verwendet werden.

Weiter sind innerhalb der Außenwand 5 des Abschlußteils 3 sternförmig und in Längsrichtung verlaufende Verstärkungswände 15 eingeformt, die hier auch die Hohlzylinder 13, 14 miteinander verbinden und abstützen.

Mit der vorliegenden Erfindung wird ein preiswerter, einfach montierbarer und zur Befestigung von Anbauteilen gut geeigneter, endseitiger Abschluß eines Fahrzeuglängsträgers geschaffen.

## Patentansprüche

1. Endseitiger Abschluß eines Fahrzeuglängsträgers,
mit einem Längsträgerteil als Hohlprofilträger und
mit einem Abschlußteil, das an einem Ende des Längsträgerteils teilweise eingesteckt und mit diesem verbunden ist und das wenigstens ein Befestigungselement zur Befestigung von Anbauteilen aufweist, wobei das Abschlußteil ein Abschnitt eines Strangpreßprofils mit einer ringförmig geschlossenen Außenwand ist, und alle Elemente des Abschlußteils in Strangpreßrichtung mit gleichbleibender Materialdicke ausgerichtet sind,
dadurch gekennzeichnet,
daß die Außenkontur (6) des Abschlußteils (3) (bzw. des Längsträgerhohlprofils) der Innenkontur (2) des Längsträgerhohlprofils (1) (bzw. des Abschlußteils) entspricht, und
daß das Längsträgerhohlprofil (1) und das Abschlußteil (3) mit gegenseitigen Anlageflächen formschlüssig ineinandergesteckt sind, wobei die Längsachse des Abschlußteils (3) und die Längsachse (4) des Längsträgerteils (1) in der gleichen Richtung liegen.

2. Endseitiger Abschluß nach Anspruch 1, dadurch gekennzeichnet, daß an der Außenkontur (6) des Abschlußteils (3) als Befestigungselement wenigstens eine Leiste angeformt ist, die als Befestigungsflansch (7, 11) und/oder als Mutternhalter (9) zur Befestigung von Anbauteilen zur Verfügung steht.

3. Endseitiger Abschluß nach Anspruch 2, dadurch gekennzeichnet, daß die Befestigungselemente (7, 9, 11) jeweils einseitig zu einer Endseite des Abschlußteils (3) ausgeklinkt sind und im Bereich der Ausklinkung (Bereich 12) das Längsträgerhohlprofil (1) auf das Abschlußteil aufgeschoben ist.

4. Endseitiger Abschluß nach einem der Ansprüche 1 bis 3, dadurch gekennzeichnet, daß innerhalb des Hohlprofils des Abschlußteils (3) als Befestigungselement wenigstens ein in Längsrichtung verlaufender Hohlzylinder (13, 14) als Befestigungsauge, insbesondere zur Aufnahme einer Verschraubung, vorgesehen ist.

5. Endseitiger Abschluß nach einem der Ansprüche 1 bis 4, dadurch gekennzeichnet, daß innerhalb des Hohlprofils des Abschlußteils (3) in Längsrichtung verlaufende Verstärkungswände (15) angeordnet sind, die ggfs. die in Längsrichtung verlaufenden Hohlzylinder (13, 14) verbinden.

6. Endseitiger Abschluß nach einem der Ansprüche 1 bis 5, dadurch gekennzeichnet, daß das Längsträgerteil (1) und/ oder das Abschlußteil (3) aus Leichtmetall, insbesondere aus einer Aluminiumlegierung, bestehen.

7. Endseitiger Abschluß nach einem der Ansprüche 1 bis 6, dadurch gekennzeichnet, daß die Verbindung zwischen dem Längsträgerteil (1) und dem Abschlußteil (3) durch Schweißen und/oder Verschrauben und/oder Verkleben und/ oder Vernieten hergestellt ist.

## Claims

1. End closure for a side member on a vehicle,
comprising a side member part in the form of a hollow profile beam and
comprising a closure part which is partly inserted at one end of the side member part and is joined thereto and which features at least one fixing element for the attachment of mounted parts, the closure part being a portion of an extruded profile having an external wall closed in a ring shape, and all the elements of the closure part being orientated in the extruding direction with a constant thickness of material,
characterised in that
the external contour (6) of the closure part (3) (and of the hollow side member profile) matches the internal contour (2) of the hollow side member profile (1) (and of the closure part), and
the hollow side member profile (1) and the closure part (3) have their contact surfaces pushed telescopically into one another in a form-fit, the longitudinal axis of the closure part (3) and the longitudinal axis (4) of the closure part (1) being situated in the same direction.

2. End closure according to claim 1, characterised in that moulded on the external contour (6) of the closure part (3) to form a fixing element is at least one strip which is available for use as a fixing flange (7, 11) and/or as a nut holder (9) for the attachment of mounted parts.

3. End closure according to claim 2, characterised in that the fixing elements (7, 9, 11) are in each case disengaged on one side at one end face of the closure part (3) and in the area of disengagement (area 12) the hollow side member profile (1) is pushed onto the closure part.

4. End closure according to any of claims 1 to 3, characterised in that inside the hollow profile of the closure part (3) there is provided as a fixing element at least one hollow cylinder (13, 14) which extends lengthways to form a fixing lug, more particularly for a receiving a bolted connection.

5. End closure according to any of claims 1 to 4, characterised in that inside the hollow profile of the closure part (3) are arranged strengthening panels (15) which extend lengthways and which, if appropriate, connect the longitudinally extending hollow cylinders (13, 14).

6. End closure according to any of claims 1 to 5, characterised in that the side member part (1) and/or the closure part (3) are made of light metal, more particularly of an aluminium alloy.

7. End closure according to any of claims 1 to 6, characterised in that the joint between the side member part (1) and the closure part (3) is produced by welding and/or bolting together and/or bonding and/or riveting.

## Revendications

1. Partie terminale d'un longeron de véhicule, comprenant
une partie de longeron sous forme de poutre profilée creuse et
une pièce terminale qui est emboîtée partiellement à une extrémité de la partie de longeron et jointe à celle-ci et qui présente au moins un élément de fixation pour le montage de pièces rapportées, la pièce terminale étant un segment d'un profilé filé à paroi extérieure annulaire fermée, et tous les éléments de la pièce d'extrémité étant orientés dans la direction de filage avec une épaisseur constante de matériau,
caractérisée en ce que
le contour extérieur (6) de la pièce terminale (3) (ou du profilé creux formant longeron) correspond au contour intérieur du profilé creux formant longeron (1) (ou de la pièce terminale), et
le profilé creux formant longeron (1) et la pièce terminale (3) sont emboîtés l'un dans l'autre à ajustement serré par des surfaces de contact mutuel, l'axe longitudinal de la pièce terminale (3) et l'axe longitudinal (4) de la partie de longeron (1) s'étendant dans la même direction.

2. Partie terminale selon la revendication 1, caractérisée en ce qu'il est formé, en tant qu'élément de fixation, sur le contour extérieur (6) de la pièce terminale (3), au moins une nervure qui est disponible, en tant que bride de fixation (7,11) et/ou en tant que porte-écrou (9), pour la fixation de pièces rapportées.

3. Partie terminale selon la revendication 2, caractérisée en ce que les éléments de fixation (7,9,11) sont encochés chacun d'un côté vers un côté d'extrémité de la pièce terminale (3) et le profilé creux formant longeron (1) est glissé sur la pièce terminale dans la région des encoches (région 12).

4. Partie terminale selon l'une quelconque des revendications 1 à 3, caractérisé en ce qu'il est prévu à l'intérieur du profil creux de la pièce terminale (3), en tant qu'élément de fixation, au moins un cylindre creux (13,14) qui s'étend en direction longitudinale et qui sert d'oeil de fixation, destiné par exemple à recevoir un raccord à vis.

5. Partie terminale selon l'une quelconque des revendications 1 à 4, caractérisée en ce qu'il est disposé, à l'intérieur du profil creux de la pièce terminale (3), des cloisons de renforcement (15) qui s'étendent en direction longitudinale et qui relient éventuellement les cylindres creux (13,14) s'étendant en direction longitudinale.

6. Partie terminale selon l'une quelconque des revendications 1 à 5, caractérisée en ce que la partie de longeron (1) et/ou la pièce terminale (3) sont faites de métal léger, en particulier d'un alliage d'aluminium.

7. Partie terminale selon l'une quelconque des revendications 1 à 6, caractérisée en ce que la jonction entre la partie de longeron (1) et la pièce terminale (3) est effectuée par soudage et/ou vissage et/ou collage et/ou rivetage.
